# EUROPEAN PATENT APPLICATION

(11) **EP 1 666 916 A2**
(43) Date of publication of application: **07.06.2006**
(21) Application number: 05257472.0
(22) Date of filing: 05.12.2005
(51) Int. Cl.: G01S 13/74, G01S 5/06, G01S 5/14

(54) **Tracking system**

(30) Priority: 03.12.2004 GB 0426554; 25.02.2005 GB 0503922
(71) Applicant: Forbes, William, Cambuslang Glasgow G72 8AJ (GB)
(72) Inventor: Forbes, William, Cambuslang Glasgow G72 8AJ (GB)
(74) Representative: Murnane, Graham John

(57) **Abstract**

A system for tracking the movement of an object (18, 118) within a predetermined area (20) is disclosed. The system comprises means for plotting the predetermined area (20); transmission means (10, 12) for transmitting an electromagnetic signal across the area (20); and at least two receivers (10, 12) to receive an electromagnetic signal from the object (18, 118) in such a manner as to establish the distance between each transmitter (10, 12) and the object (18, 118). The system further comprises data processing means (14) to derive the position of the object (18, 118) within the predetermined area (20).

## Description

This invention relates to a system for tracking the movement of an object.

The invention is particularly, but not exclusively, useful in assisting referees in team ball games. The invention will be described herein with reference to football, i.e. association football (soccer), but is equally applicable to other sports such as rugby, American football, hockey, ice hockey, etc.

In games such as football, referees are required to make rapid decisions during the course of play, and often have to do so in situations where they are unsighted, or are viewing the critical event at a difficult angle. Examples of this problem include determining whether the ball has passed entirely over the goal line, and detecting whether a player is offside at the moment the ball is passed forward.

It is known to use television systems to assist in refereeing, for example by replaying from a number of video recordings. However, these only allow replays to be viewed off the pitch, are slow to use and tend to disrupt play, and are too expensive for use by the smaller professional clubs and by amateurs.

An object of the present invention is to provide a tracking system which is capable of providing useful information to a referee on the field of play as a game progresses.

According to a first aspect of the present invention there is provided a system for tracking the movement of an object within a predetermined area, the system comprising:
means for plotting the predetermined area;
transmission means for transmitting an electromagnetic signal across the area;
at least two receivers to receive an electromagnetic signal from the object in such a manner as to establish the distance between each transmitter and the object; and
data processing means to derive the position of the object within the predetermined area.

Preferably, the system further comprises means for signalling when the object moves out of the predetermined area. Additionally, or alternatively, the system further comprises means for signalling when a predetermined movement of the object occurs within the predetermined area.

Preferably, the object is a ball, and the predetermined area a pitch or court. Additionally, or alternatively, the object may be one or more players.

Preferably, the predetermined area defines the area in which the ball is still in play.

Preferably, the electromagnetic signal is in the form of radio waves and the object comprises means for reflecting the waves from the transmission means in modified form to the receivers.

Preferably, the means for reflecting the radio waves comprises a partially shielded antenna.

Preferably, the partially shielded antenna is in the form of metallic stitching.

Preferably, the partially shielded antenna is in the form of a factory produced metallic insert or a disposable metal impregnated ink print.

Preferably, the object includes the transmission means.

Preferably, the transmission means is a transmitter chip.

Preferably, the transmitter chip is incorporated into the ball. Additionally, or alternatively, the transmitter chip may be incorporated on one or more players.

Preferably, the system includes three receivers.

Preferably, the data processing means derives the position of the object relative to the predetermined area by triangulation.

According to a second aspect of the present invention there is provided a sporting article being provided with means for reflecting an electromagnetic signal in a modified form.

Preferably, the sporting article is for use with the system of the first aspect of the present invention.

Preferably, the sporting article is a football sewn from a number of panels, and the reflecting means comprises a partially shielded antenna in the form of metallic stitching.

According to a third aspect of the present invention there is provided a sporting article provided with transmission means for transmitting an electromagnetic signal.

Preferably, the sporting article is for use with the system of the first aspect of the present invention.

Preferably, the sporting article is a football sewn from a number of panels, and the transmission means is a transmitter chip incorporated into the football.

Preferably, the transmitter chip is supported in the centre of the football by resilient stays connected to the bladder.

According to a fourth aspect of the present invention there is provided a method of tracking the movement of an object within a predetermined area, comprising the steps of:
communicating at least two sets of location data to a data processor;
processing the location data in order to determine an area in which the movement of the object is to be tracked;
providing transmission means for transmitting an electromagnetic signal across the area;
providing at least two receivers to receive an electromagnetic signal from the object in such a manner as to establish the distance between each transmitter and the object;
using the data processor to derive the position of the object relative to the predetermined area.

Preferably, the method of plotting the predetermined area includes providing a portable unit which is in communication with the data processor. The portable unit is preferably used to plot the predetermined area by carrying it to predefined locations.

Preferably, the data processor derives the position of the object within the predetermined area by triangulation.

Preferably, at least three sets of location data are communicated to the data processor.

Preferably, the system includes three receivers.

Embodiments of the present invention will now be described, by way of example only, with reference to the accompanying drawings, in which:-
Figure 1 is a schematic illustration of one example of the invention;
Figure 2 shows a ball used in the example of Figure 1;
Figure 3 shows an alternative embodiment of a ball used in the example of Figure 1;
Figure 4 shows the inflation valve and power connections of the ball of Figure 3;
Figure 5 is a schematic illustration of the tracking system in use;
Figure 6 is an illustration of the situation where the ball of Figure 2 or Figure 3 is out of play; and
Figure 7 is a schematic illustration of the situation where a player is offside.

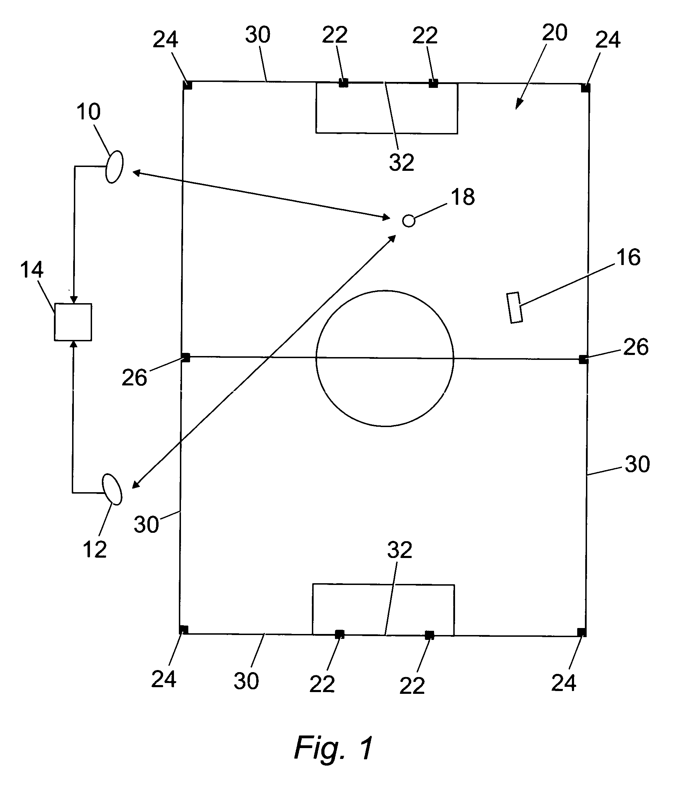

Figure 1 shows one form of the present invention as applied to football. The system of Figure 1 comprises two transmitter/receivers 10 and 12 and a central control unit/central processing unit (CPU) 14 (an example of data processing means), and a portable unit 16 which is in wireless communication with the CPU 14. The system operates with a modified football 18 (an example of an object), which will be described in greater detail below.

The system is based upon triangulation. Each of the transmitter/receivers 10, 12 transmits electromagnetic signals and detects receipt of the signals reflected by the ball 18. The time lapse between transmission and reception defines the distance between the transmitter/receiver 10, 12 and the ball 18, and the interception of the two distances defines the position of the ball 18.

The transmitter/receivers 10 and 12 may be positioned anywhere in the vicinity of the pitch 20 (an example of a predetermined area).

Before the game starts, the transmitter/receivers 10, 12 are placed at any suitable locations. The portable unit 16 is then carried by a user to predefined points of the pitch 20, such as the goal posts 22, the corner flags 24 and the centre line 26 to plot an area. At each of these locations, the user enters the location data and the position of the location relative to the transmitters is established by triangulation, and stored in the CPU 14. Thus, the geography of the pitch 20 relative to the transmitter/receivers 10, 12 is defined in the CPU 14, which allows the system to determine the location of the ball 18 at any time.

The geography of the pitch 20 requires establishing a large amount of location data. However, the simplest area, i.e. a rectangle, can be defined by providing the CPU 14 with only two data locations. As the software of the CPU 14 is provided with details of a reference position, which may be in the case of a rectangle, a corner point.

The pitch 20 need never be seen. It is a computer generated field of play modelled on the actual pitch. Prior to the match, the officials walk the pitch 20 and use a hand held PalmTop computer or PDA (an example of a portable unit) to signal the points of the pitch 20 back to the CPU 14 using Wi-Fi® or Bluetooth® technology. The CPU 14 receives the information on the position of the corner flags 24, goal posts 22 and cross bar 23 and the half way line 26. The CPU 14 then plots the "picture" of the pitch 20. The dimensions of the computer generated pitch 20 are typically one half ball width greater than the actual pitch, as this defines the area of the pitch which the ball 18 is still in play.

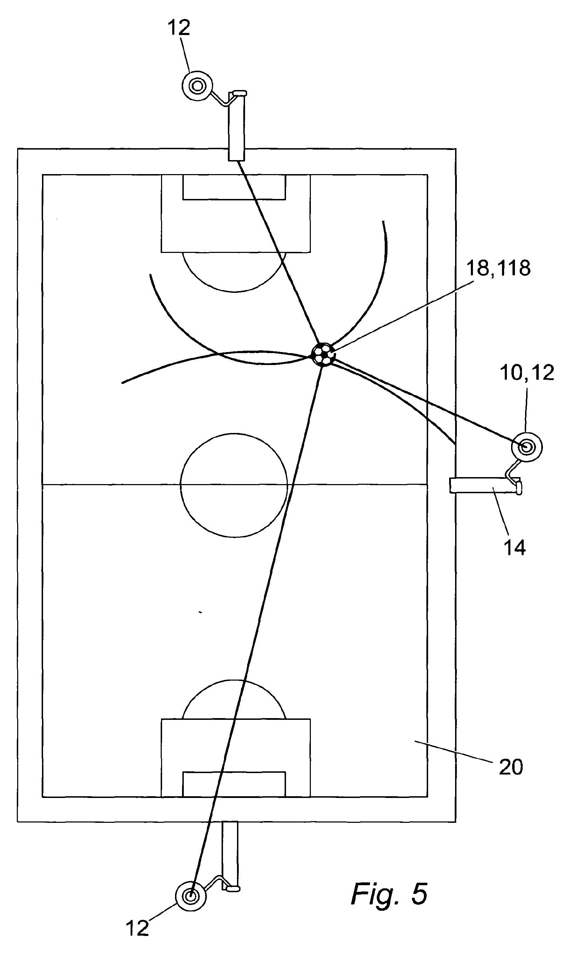

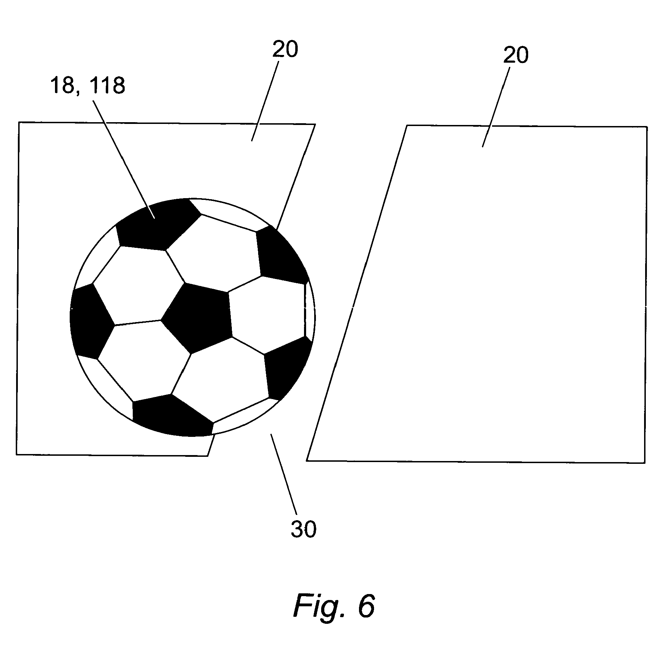

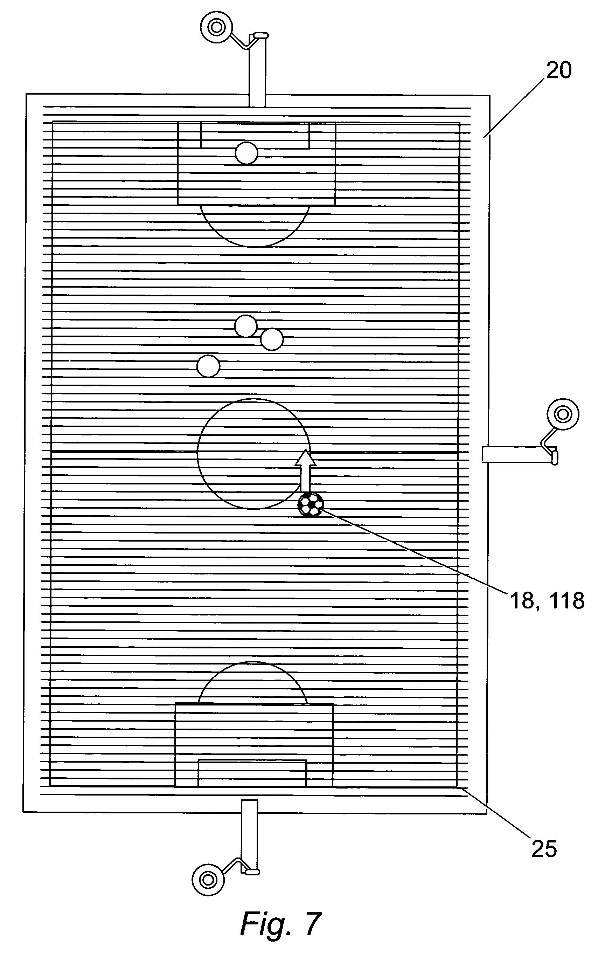

Figure 5 illustrates the system in use. Any signal received within that "picture" shows that the ball 18 is in play. The pitch 20 can therefore be irregular in shape but the CPU 14 will still record this. To assist the software associated with the CPU 14 the computer generated pitch 20 will be divided into a number of sectors 25 running across the width of the pitch 20 (see Figure 7). These sectors 25 can be any width but initially they will be set at 110 mm wide and will extend the pitch 20 by the required number of sectors to allow one half of a ball 18 width to be recorded past the line. (This is important to prove that "the whole of the ball is over the line" (see Figure 6)).

The pitch 20 need not be measured and signalled at every game. For example, three pitch models at the beginning of each season may be measured and submitted to the relevant authority. The referee can be informed on the day of the match that they are playing "Ibrox No. 2 pitch" and simply check some measurements to ensure this is the case. UEFA will be able to use this to ensure that clubs in European competitions comply with their pitch standards in relation to the relevant dimensions. As part of the pre-season routine technicians may work with the ground keeping staff in setting out, measuring and recording the selected pitches 20. These can be registered or logged with the ruling bodies. If, during a season, a pitch 20 requires repair or alteration then the referee will still be trained to set up the pitch 20 on the day of the match in an exercise taking no more than it takes to the current officials to check the playing surface. During that pre-season survey the technical team can also mark the preferred location of the signal receivers which take the signal from the ball and send it to the CPU 14 for calculation and interpretation. Ideally, one will be set behind each goal with a third (checking unit) perhaps in a central position close to the halfway line 26. This is suggested for ease of operation but it does not actually matter where the transmitters/receivers 10, 12 are placed providing they are present when the pitch dimensions are initially logged and remain in that same position for the duration of the particular match. For consistency, security and ease of operation however it is expected that fixed locations will be used with the transmitters/receivers 10, 12 housed in a structure which remains in the same location for the entire season.

The information provided to the referee is particularly important when determining when the ball 18 goes out of play, over the touch lines 28 or the bye lines 30, or when the ball 18 crosses one of the goal lines 32. During the game, the portable unit 16 is carried by the referee, and the foregoing events (or any other predefined events) are communicated by the CPU 14 to the portable unit 16. Of course it should be appreciated that referee may carry another suitable communication device, such as a palmtop or personal digital assistant (PDA), for communicating with the CPU 14.

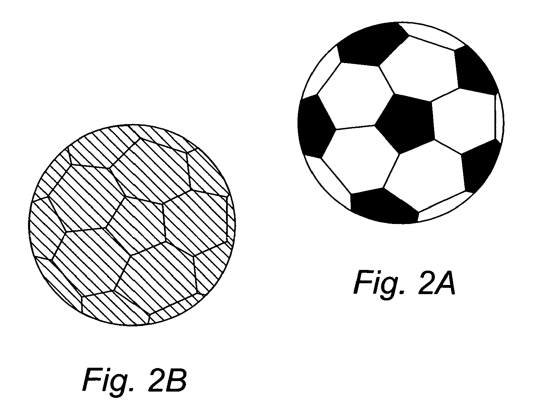

The ball 18 is modified both to ensure return of the transmitted electromagnetic signals and to improve security and reliability. Referring to Figure 2, the ball 18 is constructed from the usual hexagonal and pentagonal pieces as shown in Figure 2A. The ball incorporates an antenna by means of forming the internal stitching, as indicated in Figure 2B, of a material which acts as a partially (or randomly) shielded antenna; a suitable material is made from randomly twisted fine copper and steel wire, because of their relatively low cost and high conductivity/shielding properties. Other materials which are suitable for use in the randomly shielded antenna are silver (for its shielding properties) and magnetised steel (for its conductivity).

This allows the ball 18 to be virtually identical to a standard ball, and to be made by existing techniques without adding substantially to cost.

The ball 18 can be manufactured by mass production techniques since there is no requirement for the antenna to be accurate. The individual ball 18 or balls to be used in a given match are "introduced" to the system beforehand, and only balls which have been registered in this way will be recognised by the system during play.

The partially shielded antenna will return a signal different from that received (an example of a modified signal), the differences being individual to that ball 18. This has a number of benefits. The signal returned from the ball 18 is readily distinguished from other reflected signals, for example from steelwork in stadium structures. Any substitution of the ball 18 will be noted, as will the presence of two balls on the pitch at the same time.

Any suitable means of communication may be used between the various parts of the system. It may be particularly convenient to use mobile phone global system for mobile communications (GSM) or wireless application protocol (WAP) technology. In that event, instead of each transmitter/receiver 10, 12 detecting its own reflected signals. it would be possible to measure transit time from one to the other by each unit in effect telephoning its counterpart.

WAP technology will be particularly useful between the CPU 14 and the portable unit 16, and could potentially allow the referee to have information such as, for example, video replay of incidents.

Of course it should also be appreciated that other forms of communication between various parts of the system could be used, for example third generation (3G) mobile telecommunications, GPRS (General Packet Radio Service), Bluetooth®, Wi-Fi® and WiMax.

The system could be further extended. For example, by securing partially shielded antennas of differing characteristics to the playing kit of the players, the positions of all participants may be monitored which can, for example, simplify the judgement of offside situations.

One particular area of interest is detecting precisely when a goal is scored. The system can be pre-programmed with information defining the diameter of the ball 18 and the width of the goal line 32, to permit accurate indication of when the entire ball 18 crosses the line.

The software in the CPU 14 calculates the position of the ball 18 at any point in time whether it is in play or not. Only when the ball 18 signal is recognised as coming from a location within the pitch 20 will the information become active. Each transmitter/receiver 10, 12 will calculate how long it takes to receive the signal and the delivery speed is known. The CPU 14 will interpret this information and calculate the location of the ball 18 based on the information given.

The position of the ball 18 is calculated by triangulation but interpolation will also be used to allow the referee to consider the possibility of the ball 18 being deflected whilst it is out of the referee's sight. In such circumstances the referee will be alerted to the possibility and allowed to make his own decision.

The position of the ball 18 can be notified to the referee even when his back is turned such as at free kicks. By using the hand held communicator (PDA) the referee can be constantly informed of the position of the ball 18. This will be useful in arranging free kicks and other dead ball situations.

Similarly, and most importantly it will automatically signal when the whole of the ball 18 enters the net. This important rule can be specifically written into the CPU software.

The transmitter/receivers 10, 12 gather the information from the ball 18 and transmit this to the CPU 14 for analysis and interpretation. The combination of the signals allows the position of the ball 18 to be calculated. The transmitter/receivers 10, 12 are battery powered and include and stand independent of the CPU 14 within a protective housing (not shown) to avoid ball or player impact. Of course the transmitter/receivers 10, 12 may be powered by any other suitable power source. They can be located anywhere adjacent to the field of play but it is suggested that one is placed behind each goal with the third checking unit in a mid point. They communicate with the CPU 14 using Bluetooth® or similar radio technologies. It should be appreciated that the transmitters/receivers 10, 12 may be connected to the CPU 14 by any other suitable means, e.g. electrical cables.

The transmitter/receivers 10, 12 cannot take information from other sources and have inbuilt security protection to combat deliberate attempts to do so.

There are two main forms of interpreting the information provided to the CPU 14 - the "algorithmic interpretation" and the "rules interpretation".

With the "algorithmic interpretation", the information provided by the transmitters/receivers 10, 12 is gathered in the CPU 14 and subjected to mathematical tests to provide the location of the ball 18. The CPU 14 already has the map of the pitch 20 to set the information against and by combining the two sets of information a plot of where the ball 18 is positioned on the field of play can be interpreted.

The calculations are relatively simple and fast - all completed in real time. The software then takes this further by predicting the movement of the ball 18. By analysing speed, direction and the limits of the pitch 20 the software can ask questions if the predicted outcome does not happen. For example, the received information shows that the ball 18 is heading out of play for a goal kick when a sudden deviation is recorded and the ball 18 is shown to be in the net. The CPU 14 will then ask questions such as "Was ball deflected?". This information can be ignored or used by the referee whose decision is always final.

With the "rules interpretation", having completed the tracking of the movement of the ball 18 on the pitch 20 the information is then set against the actual rules of the game to allow the referee to be advised accordingly. The simplest yet perhaps most crucial of all this information is when the ball 18 is shown to be in the area of the goal and a goal is indicated by referee's PDA. The referee will be forced to stop play and either award a goal or give an alternative decision. This is important - whilst the referee's PDA will indicate a goal the referee may have an alternative decision to make, i.e. foul on the goalkeeper; which no matter how sophisticated the system becomes demonstrates that the final decision is left with the referee. The referee's PDA only knows where the ball 18 is and can only interpret the rules of the game in relation to the ball 18 and the field of play, the referee always has the final say.

Examples of Rules where immediate benefits can be realised are:

### Ten Yard Rule

1. Referee signals for the free kick and sets out the position by placing the ball 18.
2. Using his hand held unit he can be signalled when he is ten yards or 9.25 metres from the ball.
3. The defensive wall can then be placed in an accurate position from the point of the offence.
4. Similarly, if the new 10-yard dissent penalty rule is employed then a further 10 yards can be imposed with accuracy.
5. Should the wall move or should the attacking team attempt to reposition the ball 18 before taking the kick, then the referee can be alerted to take the appropriate action.

### The Whole of the Ball Over the Line

As demonstrated above, there should be no debate as to whether the whole of the ball is over the line of play. In such circumstances the referee will be notified and play will stop. The official is then left to make the appropriate award, i.e. corner kick, goal kick, etc.

Using the same technology, it is also possible to tag the players and record their movements. By using partially shielded antennas embedded in, for example, an arm band the players movements can also be plotted on the pitch 20 and interpreted in relation to the rules of the game.

In doing so tremendous possibilities are created in relation to the administration of the game, the observance of the rules and the reporting standards achieved. In relation to the rules additional advantages can be seen on:

### Movement of the Goalkeeper

As a continuation of the ten yard rule (above) the movement of the goalkeeper during a penalty kick can be recorded and relayed to the referee when observing the kick being taken. Similarly any deliberate deviation of the taker's run will also be reported to the official.

### Offside

That most controversial of rules, the offside rule, can be legislated for by present invention. As highlighted above, the pitch 20 will be divided into sections, each equivalent to the width of half a ball (set at 110 mm). When players' movements are recorded they will be plotted in the relevant section. By adjusting the software the signal for offside can be given when the attacker is recorded one full section ahead of the (second) last defender. This is the equivalent of half a body width and allows for movement in players arms when running. The software will allow for players running from an offside to an onside position and will interpret any offside player in the direct view of the goalkeeper as interfering with play in an offside position.

With the speed of the modern game it is only natural for inconsistency to develop. The tracking system can keep up with play at all times and will always interpret the rule in the same way. Similarly if the referee is in the other part of the field then the same information will be available to him even if he cannot keep up with play.

The referee's PDA may be used as a receiver. The referee is informed of the interpretation of the rule from the CPU 14 by possessing a synchronised Palmtop or PDA operating with a Bluetooth® or similar wireless connection. The software will report the interpretation of the information set against the rules of Association Football and where appropriate prompt a response.

The synchronisation of the PDA to the CPU 14 will allow the decision to be recorded on both systems at the same time. The software used will proceed to the next logical assumption, i.e. after a goal kick is awarded the game will be restarted with a kick off from inside the six yard box. The referee being up field will not be able to tell if this has happened but the CPU 14 will. A violation in such circumstances will be alerted to the official.

The referee may also use a lap top or similar device as an administrative tool. The referee will start his day by logging onto his notebook. Directions to get to the venue will be downloaded from the internet if required and any relevant communications read via e-mail or SMS messaging. Weather reports, traffic hold ups can all be relayed to the official before reaching the match location.

On reaching the venue, the pitch 20 can either be set up or checked for dimensions if it is a prerecorded layout.

Each of the competing teams will prepare their team sheets giving details of the players featuring in the game, the officials allowed in the technical area and the tag reference numbers allocated to each player. This information will be sent to the referee's PDA by e-mail or messaging. On receipt of that information the referee can check with the ruling administration via the internet and eligibility of the featured players (through registration, disciplinary records, etc) can be checked. The referee can check the ball 18 situation before kick off and record the balls 18 to be used on the PDA. In the tunnel before proceeding to the field of play the PDA will be used to either randomly verify individual players (or the entire team) as wearing the correct arm band, or other similar object, as shown in the team sheet.

At kick off the referee will start the game clock. The PDA, synchronised to the CPU 14, will keep track of time during the game. It can if required give a pre-agreed allocation of time to each occasion when the ball 18 goes out then comes back into play. For example, 20 seconds for each free kick. This can be measured by the actual time taken and any overage added to the time added on time at the end of each half. In other words if there are twelve free kicks using up five minutes of time, the allocated time would only have been four minutes therefore there will be a minute of time added to the half. This will allow for recognised injuries and remove the advantage of time wasting tactics.

As substitutes enter and leave the field of play this will be recorded on the PDA. Similarly, offences can be recorded either on the basis of number of offences committed by a player (to record persistent fouling) or on actual punishments given, i.e. red or yellow cards. Indeed, by using flip screen technology the actual cards can even be dispensed with and the screen coloured yellow or red to display the decision of the referee. When displaying this to the player and crowd there will be no mistaking or misinterpretation of the referee's actions.

The notebook or PDA will communicate all decisions made by the referee back to the CPU 14 where a complete record of the match will be compiled. At the end of the game the referee will check that record, make any amendments or adjustments (explaining why); sign it (electronically) and send it by e-mail or by connecting with the ruling body's web site to file the official match report. The referee's pencil will be a thing of the past. The PDA will possess full linguistic capabilities and translate the report into the prescribed language in an instant.

An abridged version of this report can be made available to interested parties such as the sports news media. This will give factual information such as goal times, etc. and perhaps even offer the referee's opinion on some matters, e.g. "4.05 Thomson, Celtic No.8 sent off. Offence - violent and threatening behaviour immediate dismissal from the field of play".

Such information may help observers understand referee's decisions without the need for a post match interview or leaving the media guessing the reason or worse, making up their own interpretation.

If tagging of the players is introduced a wealth of statistical information can be gathered and transferred back to appropriate parties. Such information may help teams devise alternative training methods or be used by TV and radio companies to give depth to their commentary. For example reporting that Player X has "covered every blade of grass on this pitch" may actually mean something if the statement is backed by the fact that Player X has run 7 miles in the first half. Reporting could be raised to a higher standard if the shot from "easily thirty yards out" could be confirmed at 22 yards and travelling at 65 mph not the 80 mph suggested by the enthusiastic commentator.

Similarly, if a club receives a fact sheet that player Y appears to slow down after 70 minutes in frequent games it may suggest that there is an energy or blood sugar problem which requires different diet or training methods. Such files can be transferred either in real time for reporting purposes or after the match as part of an analysis package for the team concerned. The file may include reminders on cumulative disciplinary violations by certain players or requests to appear before certain committees to explain actions during the course of the match.

The function the transfer of information may even be adapted to inform the paying customers of what is happening. All the previously reported communications can be made available to the paying public as they observe the game of football in front of them.

Whilst the referee's PDA can tell the referee that the opposition substitute is No.8 McKenzie, the supporter of the home team may not know the player and the pre-printing of Match Day Programmes only leaves the fan with either squad information or "likely line ups". By linking this information to a stadium screen or scoreboard, accurate information on relevant events can be relayed to the fan in the stands.

Actual events such as disciplinary action may also be linked to the scoreboards, stadium screens or even back to a small lighting display on the system at smaller grounds. For example, when the red card is shown the stadium screens can be synchronised to appear red, the scoreboard can offer a written message or the lights on the system units can appear red.

The fans will also have the opportunity to visit the governing body's web site and obtain player and match information as part of an automatic process. Information such as the fastest shot recorded this season; the fittest player (who has run the furthest) will add to the fan's understanding and enjoyment of the game.

In a retail sense the fans can even be invited to subscribe to a service where real time action is relayed direct to their mobile phone - straight from the referee no less!

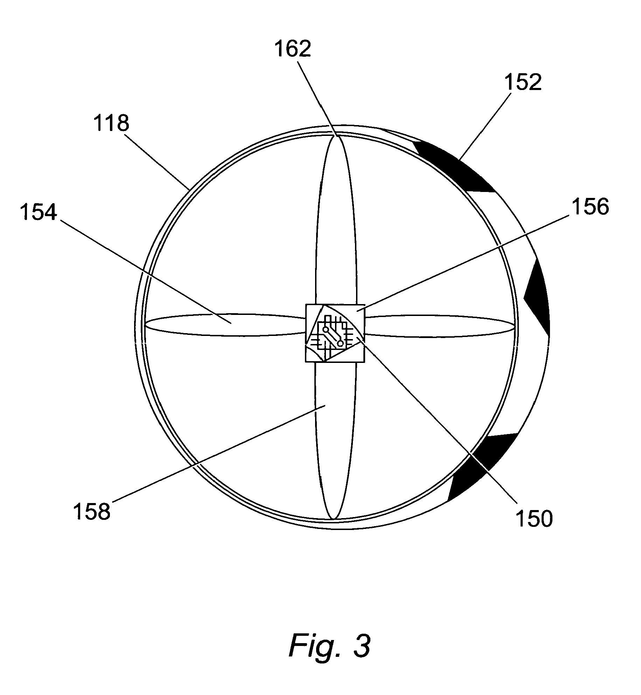

Figure 3 illustrates an alternative embodiment of a ball 118 (an example of an object), which includes transmission means.

When the ball 118 of Figure 3 is used with the aforementioned tracking system, the transmitter/receivers 10, 12 receive an electromagnetic signal directly from the ball 118, instead of receiving a reflected signal.

The tracking of the ball 118 is carried out in exactly the same way as described above. The only difference being that the ball 118 continuously transmits an electromagnetic signal which is detected by the transmitters/receivers 10, 12.

The ball 118 carries a microchip 150 with transmitting capability to constantly feed the receivers 10, 12 a continuous message at speeds of up to 40 kilobytes per second (kbps). Using a form of Radio Frequency Identification (RFID) The receivers 10, 12 will calculate how long it takes to receive the message, the speed of transfer of the message and from this an arithmetic calculation will tell the receiver 10, 12 how far the ball 118 is away from it.

To allow this information to be meaningful the chip 150 must be held within the ball 118 in a constant position - the centre.

The chip 150 will be held in this position within the rubber inner or bladder 152. As the bladder 152 inflates, internal rubber or lightweight plastic stays 154 connected to the inner wall of the bladder 152 will separate from the central chip housing 156 and produce cross members 158. When fully inflated the chip housing 156 and the cross members 158 will be taught and keep the chip 150 in a central position within the ball 118.

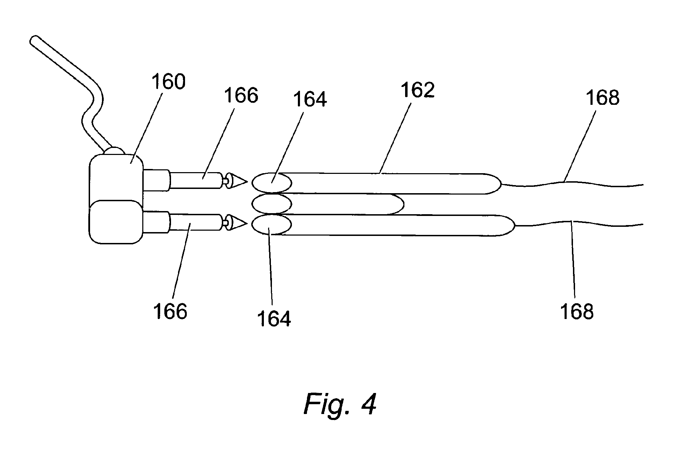

The chip 150 will may be powered by a 2.5 volt - 6.5 volt rechargeable lithium battery or similar. The charging unit 160 (seen if Figure 4) will be external and connected to the ball 118 by an adapted inflating valve 162.

To prevent player injury, at either side of the rubber inflating valve 162 two additional rubber tubes 164 will take the jack plug 166 connection from the charging unit 160. Beyond the rubber connectors the jack plugs 166 will connect with metal contacts 168 which will conduct the charge to the battery (not shown).

The microchip 150 has a transmitting capability to constantly deliver a changing message using a 66 bit transmission format. This is made up of a 32 bit encrypted string; a 28 bit identity code fixed string; a 4 bit function code; a one bit power indicator and a one bit follow on string.

The microchip 150 is embedded with automatic switching technologies which effectively turn the transmissions on and off. The transmissions are turned on when the ball 118 receives a signal from the CPU 14 (the referee at the start of the game presses a button to send a signal to activate all the balls being used during the match). The chip 150 also has an "auto shut off" or "time out" switch which turns the transmission off, say after 15 minutes of non communication from the CPU 14 or the transmitters/receivers 10, 12.

This switching feature not only saves battery power but allows the balls 118 to be used in non-recording sessions such as training or warm ups.

The microchip 150 offers each ball 118 a separate unique identity. The chip 150 will be part of a transmitting unit (not shown), including an integrated circuit encoder (not shown) which offers signals containing the identity code of the ball 118 as part of a changing code such as that contained in modern car locking systems. This offers added security to the possibility of code grabbing or code scanning by outside parties.

Prior to commencing the game, the referee will log which balls 118 are being used on his PDA. At that time the balls 118 will confirm that the battery is fully charged and the ball 118 is inflated to the proper pressure.

On the basis that more than one ball 118 is used during a football match the referee will always be informed of which one is in play. It will even send an alarm message if there are two balls 118 on the field of play at any one time. The referee will decide which is the one in play by dispensing with the unwanted one. However the software can show which is the more likely to be in play (for example if two players attempt to take each ball) by interpreting the previous play.

The balls 18 being held on the sidelines by ball boys will continue to signal to the receivers but these messages will be ignored.

In a similar manner as described above, by using transmitters embedded in an arm band the players movements can also be plotted on the pitch and interpreted in relation to the rules of the game.

Although described with specific reference to football, it will be appreciated that the invention may readily be applied to other ball games such as rugby and tennis, and to games using objects other than balls such as ice hockey.

Instead of using two transmitter/receiver units 10, 12, it would be possible to use one or more transmitters and at least two separate receivers, so long as at least two distances from known locations are established to allow a position to be defined by triangulation.

If three transmitter/receiver units 10, 12 are used, the ball 18, 118 can only ever be located in one position. This is preferable, as the software of the CPU 14 does not have to decide which position is the correct position.

In principle, forms of electromagnetic radiation other than radio waves could be employed.

Although the above system has been described with reference to tracking footballs, it should be appreciated that the invention may readily be applied to tracking other sporting articles, such as rugby balls, hockey pucks etc.

Furthermore, although described with reference to football and other sporting games, it will be appreciated that the invention may readily be applied to tracking the movement of other objects within predetermined areas, such as tracking the movements of persons within buildings.

In the case of tracking the movement of objects within buildings, the area of the building is plotted out in the same manner as described above and the object to be tracked may be a security tag, or any other object suitable to be attached to a person.

The security tag may contain a partially shielded antenna formed from a factory produced metallic insert or a disposable metal impregnated ink print.

Alternatively, the security tag may contain a similar transmitter chip as the one described above.

Other modifications and improvements may be made to the foregoing within the scope of the present invention.

## Claims

1. A system for tracking the movement of an object (18, 118) within a predetermined area (20), the system comprising:
means for plotting the predetermined area (20);
transmission means (10, 12) for transmitting an electromagnetic signal across the area (20);
at least two receivers (10, 12) to receive an electromagnetic signal from the object (18, 118) in such a manner as to establish the distance between each transmitter (10, 12) and the object (18, 118); and
data processing means (14) to derive the position of the object (18, 118) within the predetermined area (20).

2. The system for tracking the movement of an object (18, 118) within a predetermined area (20) according to claim 1, further comprising means for signalling when the object (18, 118) moves out of the predetermined area (20).

3. The system for tracking the movement of an object (18, 118) within a predetermined area (20) according to claim 1 or claim 2, further comprising means for signalling when a predetermined movement of the object (18, 118) occurs within the predetermined area (20).

4. The system for tracking the movement of an object (18, 118) within a predetermined area (20) according to any preceding claim, wherein the object is a ball (18, 118).

5. The system for tracking the movement of an object within a predetermined area (20) according to any of claims 1 to 3, wherein the object may be one or more players.

6. The system for tracking the movement of an object (18, 118) within a predetermined area (20) according to claim 4, wherein the predetermined area (20) defines the area in which the ball (18, 118) is still in play.

7. The system for tracking the movement of an object (18) within a predetermined area (20) according to any preceding claim, wherein the electromagnetic signal is in the form of radio waves and the object (18) comprises means for reflecting the waves from the transmission means (10, 12) in modified form to the receivers (10, 12).

8. The system for tracking the movement of an object (18) within a predetermined area (20) according to claim 7, wherein the means for reflecting the radio waves comprises a partially shielded antenna.

9. The system for tracking the movement of an object (18) within a predetermined area (20) according to claim 8, wherein the partially shielded antenna is in the form of metallic stitching.

10. The system for tracking the movement of an object (18) within a predetermined area (20) according to claim 8, wherein the partially shielded antenna is in the form of a factory produced metallic insert or a disposable metal impregnated ink print.

11. The system for tracking the movement of an object (118) within a predetermined area (20) according to any of claims 1 to 6, wherein the object (118) includes the transmission means (150).

12. The system for tracking the movement of an object (118) within a predetermined area (20) according to claim 11, wherein the transmission means (150) is a transmitter chip (150).

13. The system for tracking the movement of an object (118) within a predetermined area (20) according to claims 4 or 6, wherein the transmitter chip (150) is incorporated into the ball (118).

14. The system for tracking the movement of an object within a predetermined area (20) according to claim 5, wherein the transmitter chip may be incorporated on one or more players.

15. The system for tracking the movement of an object (18, 118) within a predetermined area (20) according to any preceding claim, wherein the system includes three receivers (10, 12).

16. The system for tracking the movement of an object (18, 118) within a predetermined area (20) according to any preceding claim, wherein the data processing means (14) derives the position of the object (18, 118) relative to the predetermined area (20) by triangulation.

17. A sporting article (18) being provided with means for reflecting an electromagnetic signal in a modified form.

18. The sporting article (18) according to claim 17, wherein the sporting article (18) is the object according to any of claims 1 to 10.

19. The sporting article (18) according to claims 17 and 18, wherein the sporting article (18) is a football sewn from a number of panels, and the reflecting means comprises a partially shielded antenna in the form of metallic stitching.

20. A sporting article (118) provided with transmission means (150) for transmitting an electromagnetic signal.

21. The sporting article (118) according to claim 20, wherein the sporting article (118) is the object according to any of claims 1 to 6 and 11 to 16.

22. The sporting article (118) according to claims 20 and 21, wherein the sporting article (118) is a football sewn from a number of panels, and the transmission means (150) is a transmitter chip (150) incorporated into the football.

23. The sporting article (118) according to claim 22, wherein the transmitter chip (150) is supported in the centre of the football by resilient stays (154) connected to the bladder (152).

24. A method of tracking the movement of an object (18, 118) within a predetermined area (20), comprising the steps of:
communicating at least two sets of location data to a data processor (14);
processing the location data in order to determine an area (20) in which the movement of the object (18, 118) is to be tracked;
providing transmission means (10, 12) for transmitting an electromagnetic signal across the area (20);
providing at least two receivers (10, 12) to receive an electromagnetic signal from the object (18, 118) in such a manner as to establish the distance between each transmitter (10, 12) and the object (18, 118);
using the data processor (14) to derive the position of the object (18, 118) relative to the predetermined area (20).
